# EUROPÄISCHE PATENTANMELDUNG

(11) **EP 2 190 095 A1**
(43) Veröffentlichungstag der Anmeldung: **26.05.2010**
(21) Anmeldenummer: 09010711.1
(22) Anmeldetag: 20.08.2009
(51) Int. Cl.: H02J 1/10, H02M 5/40

(54) **Energieversorgungssystem**

(30) Priorität: 20.11.2008 DE 102008058379
(71) Anmelder: DB Energie GmbH, 60326 Frankfurt am Main (DE)
(72) Erfinder: Raithmayr, Werner, 61476 Kronberg (DE)
(74) Vertreter: Zinken-Sommer, Rainer

(57) **Zusammenfassung**

Das erfindungsgemäße Energieversorgungssystem (1) umfasst mindestens ein Gleichstrom-Zwischenkreisnetz (2), ein erstes Wechselstrom-Netz (3), einen ersten Umrichter (5) zum Umrichten eines Gleichstroms in Wechselstrom, ein zweites Wechselstrom-Netz (4) und einen zweiten Umrichter (5, 6) zum Umrichten eines Wechselstroms in Gleichstrom, wobei das erste Wechselstrom-Netz (3) über den ersten Umrichter (5) und das zweite Wechselstrom-Netz (3, 4) über den zweiten Umrichter (6) an das Gleichstrom-Zwischenkreisnetz (2) angeschlossen ist und das Gleichstrom-Zwischenkreisnetz (2) derart ausgebildet ist, dass an das Gleichstrom-Zwischenkreisnetz (2) mindestens ein erster elektrischer Energieerzeuger (7) anschließbar ist, so dass mittels eines an das Gleichstrom-Zwischenkreisnetz (2) angeschlossenen Energieerzeugers (7) zumindest das erste Wechselstrom-Netz (3) mit Strom versorgbar ist.

## Beschreibung

Die Erfindung betrifft ein Energieversorgungssystem.

Um eine Einspeisung von Strom aus einem zweiten Wechselstrom-Netz in ein erstes Wechselstrom-Netz, die jeweils eine unterschiedliche Nennfrequenz besitzen, zu ermöglichen, wird üblicherweise ein Umrichter verwendet, der den Wechselstrom des zweiten Wechselstrom-Netzes zunächst in eine Gleichspannung umwandelt, und ein weiterer Umrichter verwendet, der dann die Gleichspannung in eine Wechselspannung mit der Nennfrequenz des ersten Wechselstrom-Netzes umwandelt. Auf diese Weise ist es beispielsweise möglich, ein Bahnstrom-Netz mit einer Nennfrequenz im Bereich von 16,7 Hz bis 60 Hz mit Strom von einem öffentlichen Stromnetz mit einer Nennfrequenz von 50 Hz oder 60Hz zu versorgen.

Als elektrische Energieerzeuger existieren neben üblichen Großenergieerzeugern, wie Wasser-, Kohle- oder Kernkraftwerke, Energieerzeuger, die sich dadurch auszeichnen, dass sie Gleichstrom oder Strom mit einer sehr niedrigen und variablen Frequenz zur Verfügung stellen, wie beispielsweise Windkraftanlagen, Biomassekraftwerke, Blockheizkraftwerke, Photovoltaik-Anlagen oder Speichersysteme für elektrische Energie, beispielsweise Batterien. Derartige Energieerzeuger haben üblicherweise den Nachteil, dass die Leistung, die sie zur Verfügung stellen können, sehr schwankend und vergleichsweise gering ist. Eine sinnvolle Nutzung derartiger Energieerzeuger erfordert damit Maßnahmen, derartige Leistungsschwankungen ausgleichen zu können. Des Weiteren stehen solche Energieerzeuger üblicherweise nur über das öffentliche Stromnetz zur Verfügung. Möchte ein anderes Wechselstrom-Netz, beispielsweise ein Bahnstromnetz, diese Energieerzeuger nutzen, so ist eine mehrfache Umrichtung des von diesen Energieerzeugern erzeugten Stromes notwendig. Dies führt zu Energieverlusten.

Aufgabe der vorliegenden Erfindung ist es, ein Energieversorgungssystem zu schaffen, welches eine verlustarme Nutzung von elektrischen Energieerzeugern, die Gleichstrom oder Strom mit sehr niedriger Frequenz erzeugen, durch ein Wechselstrom-Netz ermöglicht.

Diese Aufgabe wird durch ein Energieversorgungssystem gemäß Anspruch 1 gelöst.

Vorteilhafte Weiterbildungen sind Gegenstände der abhängigen Ansprüche.

Das erfindungsgemäße Energieversorgungssystem umfasst mindestens ein Gleichstrom-Zwischenkreisnetz, ein erstes Wechselstrom-Netz, einen ersten Umrichter zum Umrichten eines Gleichstroms in Wechselstrom, ein zweites Wechselstrom-Netz und einen zweiten Umrichter zum Umrichten eines Wechselstroms in Gleichstrom, wobei das erste Wechselstrom-Netz über den ersten Umrichter und das zweite Wechselstrom-Netz über den zweiten Umrichter an das Gleichstrom-Zwischenkreisnetz angeschlossen ist und das Gleichstrom-Zwischenkreisnetz derart ausgebildet ist, dass an das Gleichstrom-Zwischenkreisnetz mindestens ein erster elektrischer Energieerzeuger anschließbar ist, so dass mittels eines an das Gleichstrom-Zwischenkreisnetz angeschlossenen Energieerzeugers zumindest das erste Wechselstrom-Netz mit Strom versorgbar ist.

In das Gleichstrom-Zwischenkreisnetz können insbesondere Energieerzeuger, die Gleichstrom oder Strom mit einer niedrigen Frequenz erzeugen, Strom verlustarm einspeisen. Über den Umrichter kann dieser Strom in einer vorgegebenen Frequenz in das erste Wechselstrom-Netz eingespeist werden. Eine verlustreiche Umrichtung des von diesen Energieerzeugern erzeugten Stromes zunächst in eine Wechselspannung und dann in eine Gleichspannung, die dann wieder in eine Wechselspannung mit der vorgegebenen Frequenz zur Einspeisung in das Wechselstrom-Netz umgerichtet wird, kann entfallen.

Das Gleichstrom-Zwischenkreisnetz ist über einen ersten Umrichter an das erste Wechselstrom-Netz und über einen zweiten Umrichter an das zweite Wechselstrom-Netz angeschlossen, wobei das erste Wechselstrom-Netz vorzugsweise ein Bahn-Netz und das zweite Wechselstrom-Netz vorzugsweise ein öffentliches Netz ist. Dies ermöglicht die Einspeisung von Strom in das erste Wechselstrom-Netz sowohl durch die am Gleichstrom-Zwischenkreisnetz angeschlossenen Energieerzeuger als auch durch das zweite Wechselstrom-Netz. Das erste Wechselstrom-Netz kann auf diese Weise die am Gleichstrom-Zwischenkreis angeschlossenen Energieerzeuger nutzen. Positive wie negative Leistungsschwankungen dieser Energieerzeuger können durch das zweite Wechselstrom-Netz ausgeglichen werden.

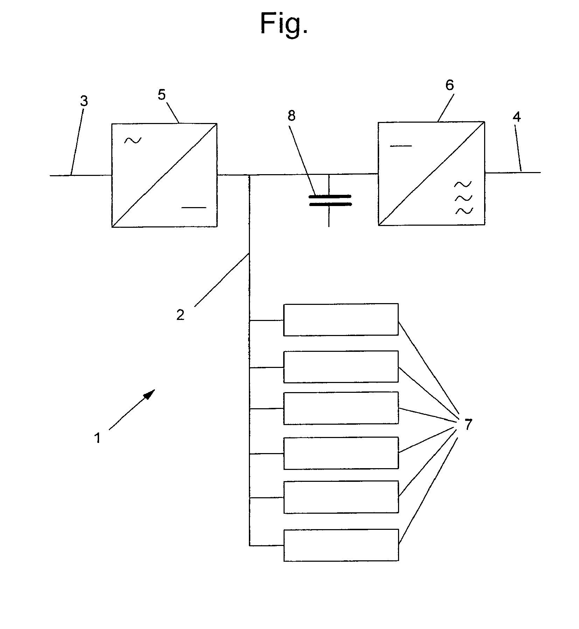

Die Erfindung wird im Folgenden anhand eines Ausführungsbeispieles, welches durch eine Figur dargestellt ist, näher beschrieben. Die Figur zeigt schematisch eine Ausführungsform eines erfindungsgemäßen Energieversorgungssystems.

Das Energieversorgungssystem 1 umfasst ein Gleichstrom-Zwischenkreisnetz 2 mit einem Zwischenkreis-Kondensator 8, ein erstes Wechselstrom-Netz 3, das über einen ersten Umrichter 5 mit dem Gleichstrom-Zwischenkreisnetz 2 verbunden ist, ein zweites Wechselstrom-Netz 4, das über einen zweiten Umrichter 6 mit dem Gleichstrom-Zwischenkreisnetz 2 verbunden ist, sowie mehrere elektrische Energieerzeuger 7, die an das Gleichstrom-Zwischenkreisnetz 2 angeschlossen sind.

Das erste Wechselstrom-Netz 3 ist ein Bahnstrom-Netz mit einer Nennfrequenz im Bereich von 16,7 Hz bis 60 Hz. Das Bahnstrom-Netz kann ein- oder zweiphasig sein. Das zweite Wechselstorm-Netz 4 ist ein öffentliches Stromnetz mit einer Nennfrequenz von 50 Hz oder 60 Hz. Der erste Umrichter 5 ist derart eingerichtet, dass er sowohl die Gleichspannung des Gleichstrom-Zwischenkreisnetzes 2 in die Nennfrequenz des ersten Wechselstrom-Netzes 3 als auch den Wechselstrom des ersten Wechselstrom-Netzes 3 in einen Gleichstrom für die Einspeisung in das Gleichstrom-Zwischenkreisnetz 2 umrichtet. Der zweite Umrichter 6 ist derart eingerichtet, dass er sowohl die Gleichspannung des Gleichstrom-Zwischenkreisnetzes 2 in die Nennfrequenz des zweiten Wechselstrom-Netzes 4 umwandelt, als auch umgekehrt den Wechselstrom des zweiten Wechselstrom-Netzes 4 in einen Gleichstrom für die Einspeisung in das Gleichstrom-Zwischenkreisnetz 2 umrichtet. Die Energieerzeuger 7 sind derart eingerichtet, dass diese unmittelbar Gleichstrom erzeugen oder aus einer Stromquelle mit variabler Frequenz gleichgerichteten Strom, welcher im Folgenden auch unter den Begriff "Gleichstrom" gefasst wird, erzeugen. Die Energieerzeuger 7 können beispielsweise eine Windkraftanlage, ein Biomassekraftwerk, ein Blockheizkraftwerk, eine Photovoltaik-Anlage oder ein Speichersystem für elektrische Energie, beispielsweise eine Batterie, umfassen. Das Gleichstrom-Zwischenkreisnetz 2 ist überörtlich, so dass in größeren Gebieten um die Umrichter 5, 6 Energieerzeuger 7 an das Gleichstrom-Zwischenkreisnetz 2 anschließbar sind.

Das Energieversorgungssystem 1 ermöglicht es, von den Energieerzeugern 7 erzeugten Strom aus dem Gleichstrom-Zwischenkreisnetz 2 über den ersten Umrichter 5 in das erste Wechselstrom-Netz 3 einzuspeisen. Über den zweiten Umrichter 6, das Gleichstrom-Zwischenkreisnetz 2 und den ersten Umrichter 5 kann Strom aus dem zweiten Wechselstrom-Netz 4 in das erste Wechselstrom-Netz 3 zusätzlich eingespeist werden. Letzteres ermöglicht, einen hohen Leistungsbedarf des ersten Wechselstrom-Netzes 3 zu decken und Schwankungen der Energieerzeuger 7 auszugleichen. Für die Stromerzeugung sind am zweiten Wechselstrom-Netz 4 weitere Energieerzeuger angeschlossen, beispielsweise Kraftwerke, die aber in der Figur nicht näher dargestellt sind. Auch am Wechselstrom-Netz 3 sind für die Stromerzeugung weitere, nicht näher dargestellte Energieerzeuger angeschlossen.

Über die Bidirektionalität des zweiten Umrichters 6 ist es ebenfalls möglich, von den Energieerzeugern 7 erzeugten Strom in das zweite Wechselstrom-Netz 4 einzuspeisen. Gleichfalls ist es möglich, aufgrund der Bidirektionalität des ersten Umrichters 5 Strom aus dem ersten Wechselstrom-Netz 3 in das zweite Wechselstrom-Netz 4 einzuspeisen.

## Patentansprüche

1. Energieversorgungssystem (1), mindestens umfassend ein Gleichstrom-Zwischenkreisnetz (2), ein erstes Wechselstrom-Netz (3), einen ersten Umrichter (5) zum Umrichten eines Gleichstroms in Wechselstrom, ein zweites Wechselstrom-Netz (4) und einen zweiten Umrichter (5, 6) zum Umrichten eines Wechselstroms in Gleichstrom, wobei das erste Wechselstrom-Netz (3) über den ersten Umrichter (5) und das zweite Wechselstrom-Netz (3, 4) über den zweiten Umrichter (6) an das Gleichstrom-Zwischenkreisnetz (2) angeschlossen ist und das Gleichstrom-Zwischenkreisnetz (2) derart ausgebildet ist, dass an das Gleichstrom-Zwischenkreisnetz (2) mindestens ein erster elektrischer Energieerzeuger (7) anschließbar ist, so dass mittels eines an das Gleichstrom-Zwischenkreisnetz (2) angeschlossenen Energieerzeugers (7) zumindest das erste Wechselstrom-Netz (3) mit Strom versorgbar ist.

2. Energieversorgungssystem nach Anspruch 1, wobei das erste Wechselstrom-Netz (3) ein Bahnstrom-Netz und das zweite Wechselstrom-Netz (4) ein öffentliches Stromnetz ist.

3. Energieversorgungssystem nach einem der vorhergehenden Ansprüche, wobei das Energieversorgungssystem derart ausgebildet ist, dass Strom vom zweiten Wechselstrom-Netz (4) über den zweiten Umrichter (6) und den ersten Umrichter (5) in das erste Wechselstrom-Netz (3) einspeisbar ist.

4. Energieversorgungssystem nach einem der vorhergehenden Ansprüche, wobei das Energieversorgungssystem derart ausgebildet ist, dass Strom vom ersten Wechselstrom-Netz (3) über den ersten Umrichter (5) und den zweiten Umrichter (6) in das zweite Wechselstrom-Netz (4) einspeisbar ist.

5. Energieversorgungssystem nach einem der vorhergehenden Ansprüche, wobei das Gleichstrom-Zwischenkreisnetz (2) ein überörtliches Netz ist.

6. Energieversorgungsystem nach einem der vorhergehenden Ansprüche, zusätzlich umfassend mindestens einen zweiten Energieerzeuger, der am ersten Wechselstrom-Netz (3) und/oder am zweiten Wechselstrom-Netz (4) zur Einspeisung von elektrischem Strom angeschlossen ist.

7. Energieversorgungssystem nach einem der vorhergehenden Ansprüche, zusätzlich umfassend mindestens einen ersten Energieerzeuger (7) zum Erzeugen von Strom, der an das Gleichstrom-Zwischenkreisnetz (2) angeschlossen ist.

8. Energieversorgungssystem nach Anspruch 7, wobei der Energieerzeuger (7) derart eingerichtet ist, dass dieser Gleichstrom erzeugt.

9. Energieversorgungssystem nach Anspruch 7 oder 8, wobei mehrere Energieerzeuger (7) an das Gleichstrom-Zwischenkreisnetz (2) angeschlossen sind.

10. Energieversorgungssystem nach einem der Ansprüche 7 bis 9, wobei ein Energieerzeuger (7) eine Windkraftanlage, ein Biomassekraftwerk, ein Blockheizkraftwerk, eine Photovoltaikanlage oder ein Speichersystem für elektrische Energie, beispielsweise eine Batterie, ist.
